# EUROPEAN PATENT SPECIFICATION

(11) **EP 2 717 537 B1**
(45) Date of publication and mention of the grant of the patent: **01.03.2017**
(21) Application number: 12797017.6
(22) Date of filing: 13.03.2012
(51) Int. Cl.: H04L 29/06, H04N 21/60

(54) **MEDIA DATA CONTROL METHOD AND APPARATUS**
MEDIENDATEN-STEUERVERFAHREN UND -VORRICHTUNG
PROCÉDÉ ET APPAREIL DE COMMANDE DE DONNÉES MULTIMÉDIA

(30) Priority: 30.06.2011 CN 201110182112
(43) Date of publication of application: 09.04.2014
(73) Proprietor: Huawei Technologies Co., Ltd., Longgang District Shenzhen, Guangdong 518129 (CN)
(72) Inventor: ZHANG, Yuanyuan, Shenzhen Guangdong 518129 (CN); YUE, Peiyu, Shenzhen Guangdong 518129 (CN); SHI, Teng, Shenzhen Guangdong 518129 (CN); HUI, Yu, Shenzhen Guangdong 518129 (CN)
(74) Representative: Isarpatent
(86) International application number: PCT/CN2012/072229
(87) International publication number: WO 2012/167638

(56) References cited:
- CN-A- 1 762 155
- CN-A- 101 236 567
- CN-A- 101 951 412
- TW-B- 522 379
- US-B1- 7 895 350
- US-B2- 7 055 169
- YASUHIRO MIYAO: "An Overlay Architecture of Global Inter-Data Center Networking for Fast Content Delivery", ICC 2011, 5 June 2011 (2011-06-05), - 9 June 2011 (2011-06-09), pages 1-6, XP031908497, IEEE INTERNATIONAL CONFERENCE ON COMMUNICATIONS,KYOTO, JAPAN DOI: 10.1109/ICC.2011.5962737 ISBN: 978-1-61284-232-5
- KWANG-DEOK SEO ET AL: "A Practical RTP Packetization Scheme for SVC Video Transport over IP Networks", ETRI JOURNAL ELECTRONICS AND TELECOMMUNICATION RESEARCH INSTITUTE SOUTH KOREA, vol. 32, no. 2, April 2010 (2010-04), pages 281-291, XP002731676, ISSN: 1225-6463, DOI: 10.4218/ETRIJ.10.1409.0031

## Description

### TECHNICAL FIELD

The present invention relates to the field of multimedia data processing, and in particular, to a media data control method and apparatus.

### BACKGROUND

NAT (Network Address Translation, network address translation) is a technology for translating a private network address into a public network address, which needs to translate "a private IP address + a port number" into "a public IP address + a port number". The NAT technology can solve the shortage of IP addresses well.

In a multimedia application, one media content may include multiple types of data (for example, audio, video, and subtitle). During transmission, a manner of address reuse is generally used, that is, different types of data share one IP address but use different UDP ports to distinguish different data types. Therefore, during communication between a private network and a public network, the number of "private IP addresses + port numbers" requiring NAT is the same as the number of data types included in the media content.

With the emergence of such technologies as SVC (Scalable Video Coding, scalable video coding) and MVC (Multi-view Video Coding, multi-view video coding), one data type may include data of multiple features (for example, in an SVC-based application, the same video data may be further divided into video data of different features in terms of different frame rates, different resolutions, different quality, and so on). Therefore, it is necessary to distinguish the data of different features under different data types. A simple distinguishing manner is still distinguishing according to different port numbers. However, so long as the port numbers corresponding to the data of various features are different, NAT needs to be performed respectively, resulting in a great number of "private IP addresses + port numbers" requiring NAT, that is, resulting in a large NAT overhead.

In another manner, the data of different features under one type corresponds to the same IP address and UDP port number, and the data of different features is distinguished by syntax. This means that the data of different features under the same type is transmitted through the same media stream.

However, in the prior art, control can be performed only in units of media streams. Therefore, when the data of different features under the same type is transmitted through the same media stream, if independent control needs to be performed for the data of different features in an actual application, the prior art cannot implement such control.

The document "An Overlay Architecture of Global Inter-Data Center Networking for Fast Content Delivery" (YASUHIRO MIYAO, ICC 2011 - 2011 IEEE INTERNATIONAL CONFERENCE ON COMMUNICATIONS - 5-9 JUNE 2011 - KYOTO, JAPAN, pages 1-6) discloses an overlay architecture of global inter-data center networking for fast content delivery. As disclosed in this document, the file is segmented into blocks in advance, and they are sent in a round-robin manner over multiple parallel connections (see *section V, part A of* the said document ).

Document US 7 055 169 B2 discloses a methodology for enabling the creation and/or control of interative television content using declarative-like directives such as HTML, scripting languages, or other languages.

Document US 7 895 350 B1 discloses a method for processing an incoming data stream to identify sub-streams of interest for further processing and routing the sub-streams to corresponding destinations for further processing.

### SUMMARY

The present invention provides a media data control method and apparatus, which can implement independent control for data of different features under the same type in the case where the data of different features is transmitted through the same media stream.

In one aspect, the present invention provides a media data control method, including: receiving a control request message sent by a terminal, where the control request message carries identification information of a substream and a uniform resource identifier URI of a media stream to which the substream belongs, wherein, the control request message is an real time streaming protocol, RTSP, PLAY request message or an RTSP PAUSE request message;; obtaining the identification information of the substream and the URI of the media stream to which the substream belongs; determining, according to the identification information of the substream and the URI of the media stream to which the substream belongs, media data of the substream; and performing, based on the media data, a control operation requested by the terminal, for the substream, wherein, the control operation is play control or pause control;
wherein before the receiving a control request message sent by a terminal, the method further comprises: receiving a description information request message sent by the terminal; and returning a response message carrying substream declaration information to the terminal, so that the terminal obtains the identification information of the substream according to the substream declaration information; or
wherein before the receiving a control request message sent by the terminal, the method further comprises: receiving an RTSP SETUP request message sent by the terminal, wherein the RTSP SETUP request message carries a substream control feature tag; obtaining the substream control feature tag; and, if the substream control feature tag is capable of being identified correctly, returning a response message that carries information indicating that substream control is supported to the terminal, so that the terminal initiates substream control; or otherwise, returning a response message that carries information indicating that substream control is not supported to the terminal.

In another aspect, the present invention provides a media data control apparatus, including: a first message receiving unit, configured to receive a control request message sent by a terminal, where the control request message carries identification information of a substream and a uniform resource identifier URI of a media stream to which the substream belongs, wherein, the control request message is an real time streaming protocol, RTSP, PLAY request message or an RTSP PAUSE request message;; an information obtaining unit, configured to obtain the identification information of the substream and the URI of the media stream to which the substream belongs; a data determining unit, configured to determine, according to the identification information of the substream and the URI of the media stream to which the substream belongs, media data of the substream; and a media control unit, configured to perform, based on the media data, a control operation requested by the terminal, for the substream, wherein, the control operation is play control or pause control;
wherein, the apparatus further comprises: a second message receiving unit, configured to receive a description information request message sent by the terminal; and, a first responding unit, configured to return a response message carrying substream declaration information to the terminal, so that the terminal obtains the identification information of the substream according to the substream declaration information; or
wherein, the apparatus further comprises: a second substream control feature tag obtaining unit, configured to: receive an RTSP SETUP request message sent by the terminal, wherein the RTSP SETUP request message carries a substream control feature tag; and obtain the substream control feature tag; and, a second control unit, configured to: if the substream control feature tag is capable of being identified correctly, return a response message that carries information indicating that substream control is supported to the terminal, so that the terminal initiates substream control; or otherwise, return a response message that carries information indicating that substream control is not supported to the terminal.

According to the embodiments of the present invention, the present invention discloses the following technical effects:
In the embodiments of the present invention, a control request message sent by a terminal carries identification information of a substream and a URI of a media stream to which the substream belongs, so that after a server receives the control request message from the terminal, the server can obtain the two pieces of information, further obtain, according to the two pieces of information, media data of the substream requested by the terminal, and then based on the media data, perform a corresponding control operation for the substream requested by the terminal, such as play and pause. Therefore, according to the embodiments of the present invention, independent control can be implemented for data of different features under the same type even in the case where the data of different features is transmitted through the same media stream.

### BRIEF DESCRIPTION OF DRAWINGS

To illustrate the technical solutions in the embodiments of the present invention or in the prior art more clearly, the following briefly introduces the accompanying drawings required for describing the embodiments. Apparently, the accompanying drawings in the following descriptions show merely some embodiments of the present invention, and a person of ordinary skill in the art may still derive other drawings from these accompanying drawings without creative efforts.
FIG. 1 is a flowchart of a method according to an embodiment of the present invention;
FIG. 2 is a first schematic diagram of a method according to an embodiment of the present invention;
FIG. 3 is a second schematic diagram of a method according to an embodiment of the present invention;
FIG. 4 is a third schematic diagram of a method according to an embodiment of the present invention;
FIG. 5 is a schematic diagram of an apparatus according to an embodiment of the present invention;
FIG. 6 is a flowchart of another method according to an embodiment of the present invention; and
FIG. 7 is a schematic diagram of another apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention shall fall within the protection scope of the present invention.

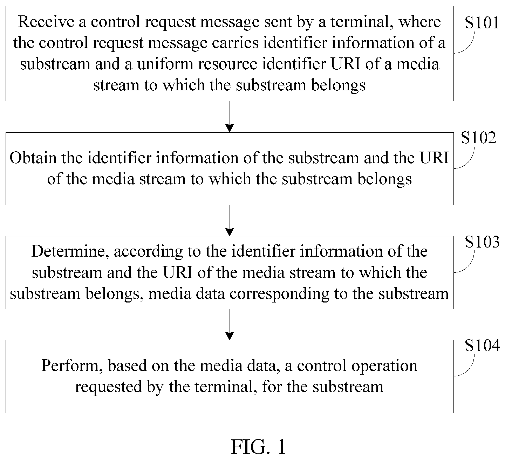

Referring to FIG. 1, a media data control method provided by an embodiment of the present invention includes the following steps:
S101. Receive a control request message sent by a terminal, where the control request message carries identification information of a substream and a URI (Uniform Resource Identifier, uniform resource identifier) of a media stream to which the substream belongs.
   It should be noted that the embodiment of the present invention may be used in combination with the real time streaming protocol (RTSP), where the control request message may be an RTSP PLAY request message or an RTSP PAUSE request message, and so on.
S102. Obtain the identification information of the substream and the URI of the media stream to which the substream belongs.
S103. Determine, according to the identification information of the substream and the URI of the media stream to which the substream belongs, media data of the substream.

The substream is a part of the media stream, and the substream can be decoded independently. Different substreams have different media features (the media features refer to a frame rate, a resolution, a bit rate, or a viewing angle, and so on), and therefore different viewing effects may be provided by different substream.

For example, a video in a media content may be encoded according to SVC. If divided from the perspectives of time, space, quality, and so on, an encoded bit stream includes multiple layers (including a base layer and an enhancement layer, where there is only one base layer, but there may be multiple enhancement layers). The base layer can be decoded independently. The video obtained by decoding the base layer may have a low frame rate, low resolution, or low quality, and may be used in a bandwidth-limited or bandwidth-unstable application environment to meet base viewing requirements. The enhancement layer cannot be decoded independently. The enhancement layer must be decoded jointly with the base layer and a dependent enhancement layer(s) (the dependent enhancement layer(s) generally refers to a enhancement layer to be dependent upon during encoding, and correspondingly, during decoding, it is also necessary to depend upon the dependent enhancement layer(s) for decoding) to improve a viewing effect. Specifically, the viewing effect provided by the base layer may be improved from time, space, or quality.

A bit stream output after SVC encoding may be transmitted through one media stream, that is, multiple layers of bit streams may be transmitted through one media stream. A substream is formed by one or more layers and can be decoded independently, that is, a substream in the media stream may be formed by a base layer alone or a combination of a base layer and one or more enhancement layers. Definitely, it should be noted that not all enhancement layers can be combined with a base layer to form a substream, and only a combination that can be decoded independently can form a substream. For example, an SVC bit stream includes a base layer, enhancement layer A, and enhancement layer B. With respect to enhancement layer A and enhancement layer B, if the base layer + enhancement layer A + enhancement layer B can be decoded independently, the combination can form a substream; if the base layer + enhancement layer B cannot be decoded independently, the combination cannot form a substream.

For another example, if a video in a media content is a multi-view video (the multi-view video refers to multiple videos output by multiple cameras in different geometric positions, where each video may be briefly referred to as a view, and the cameras herein may be virtual cameras), MVC may be used to encode the multi-view video to obtain a bit stream. In the encoding process, one video therein may be selected as a base view, and during encoding, the base view does not require inter-view prediction and therefore can be decoded independently. Other views are used for providing scalability in viewing angles. During encoding, the other views require inter-view prediction and therefore cannot be decoded independently. The other views can only be decoded jointly with the base view and the views that the other views are dependent upon during encoding.

A bit stream output after MVC encoding may be transmitted through one media stream, that is, multiple views may be transmitted through one media stream. A substream is formed by one or more views and can be decoded independently, that is, a substream in the media stream may be formed by a base view alone or a combination of a base view and one or more other views. Definitely, it should be noted that not all other views can be combined with a base view to form a substream. Only a combination that can be decoded independently can form a substream. For example, an MVC bit stream includes a base view, other view A, and other view B. With respect to other view A and other view B, if the base view + other view A + other view B can be decoded independently, the combination can form a substream; while if the base view + other view B cannot be decoded independently, the combination cannot form a substream.

In addition, MVC supports temporal scalability, that is, the bit stream of each view may be temporally divided into multiple layers. In this case, a decoding dependency introduced by temporal scalability needs to be considered for the composition of a substream. That is, a 1 temporal layer of one other view must be jointly decoded with a base view and a view at a same temporal level or lower layer among the views that the one other view is dependent upon during encoding

Regardless of SVC or MVC, different substreams provide different viewing effects, and requirements for the communication environment such as bandwidth and requirements for terminal capabilities may also vary. Therefore, if independent control can be implemented based on substreams, a user or terminal can selectively receive a substream according to a current bandwidth condition, terminal capability, and other factors, which may help achieve a balance between the playing effect and the playing smoothness.

In the embodiment of the present invention, to implement substream control, the terminal needs to carry identification information of a substream and a URI of a media stream to which the substream belongs in the control request. The identification information of a substream refers to information that can uniquely identify a substream, in a media stream to which the substream belongs. This will be described hereinafter.

For example, in SVC, a dependency_id(D), a temporal_id(T), and a quality_id(Q) may be used to identify different layers, where, the dependency_id is a dependency identifier, the temporal_id is a temporal identifier, and the quality_id is a quality identifier. Therefore, the terminal may carry a specific (D, T, Q) value in a control request message as identification information of a substream. Correspondingly, after finding data corresponding to the media stream according to the URI of the media stream, the server may further find data corresponding to the substream according to the specific (D, T, Q) value.

In MVC, a temporal_id and a view_id may be used in a substream to identify different temporal layers of different views, where, the temporal_id is a temporal identifier, and the view_id is a view identifier. Therefore, the terminal may carry specific temporal-id and view_id values in a control request message as identification information of a substream. Correspondingly, after finding data corresponding to the media stream according to the URI of the media stream, the server may further find data corresponding to the substream according to the specific temporal-id and view_id values obtained by parsing.

To conclude, regardless of SVC or MVC, the terminal may carry identification information of a substream and a URI of a media stream to which the substream belongs in a control request message, so that the server learns which substream of which media stream the terminal intends to control.

With respect to the identification information of the substream and the URI of the media stream to which the substream belongs, the terminal may first obtain description information of a media content, and then obtain the identification information and the URI from the description information. The terminal may obtain the description information of the media content in multiple ways. For example, the terminal may initiate an HTTP request through the HTTP protocol in advance, for obtaining media description information, to a server that stores the description information of the media content, and obtain the description information from the server, or receive in advance an e-mail that carries the description information of the media content, and obtain the description information from the e-mail. Definitely, the terminal may also initiate an RTSP request for obtaining media description information to the server, and obtain the description information from the server. For example, before initiating a control request, the terminal may first send a description information request message to the server, where the description information request message is an RTSP Describe request message; after receiving the message, the server may return the description information of the media content to the server, where the description information may include the number of media streams, the URI of each media stream, a protocol used to deliver each media stream, a transmission protocol parameter, media coding information, and so on. In addition, declaration information of all substreams in the media streams may be included. Therefore, by parsing a response message returned by the server, the terminal can obtain the URI of a media stream and substream declaration information of the media stream, and further obtain identification information of each substream from the substream declaration information.

In a specific implementation, substream declaration information may be used as a part of media description information, and the media description information is made into an SDP file. In the SDP file, to let the terminal know which layers are included in an SVC bit stream, the server may use parameters in the SDP file to declare the (D, T, Q) value (or the layer_id value, where the layer_id is a layer identifier) of each layer in the SVC bit stream for the terminal, and specify which layers may be combined into a substream. In this way, the terminal may directly use the (D, T, Q) value or layer_id value of each layer corresponding to a desired substream as identification information of the substream and send the identification information to the server, and correspondingly, the server obtains the (D, T, Q) value or layer_id value of each layer corresponding to the substream by parsing. After obtaining the (D, T, Q) value or layer_id value by parsing, the server obtains data corresponding to each layer according to the (D, T, Q) value or layer_id value of each layer.

In addition, in an actual application, another implementation manner may also be adopted, which may specifically be: using, among parameters in an SDP file, a parameter sprop-operation-point-info in an attribute line a=fmtp to carry a group of operation point description vector, where an operation point description vector is used to declare an operation point. The format of an operation point description vector may be: <layer-ID, temporal-ID, dependency-ID, quality-ID, profile-level-ID, avg-framerate, width, height, avg-bitrate, and max-bitrate>, where, the layer-ID indicates a layer identifier of an operation point, the temporal-ID indicates a temporal identifier of the operation point, the dependency-ID indicates a dependency identifier of the operation point, the quality-ID indicates a quality identifier of the operation point, the profile-level-ID indicates a profile level identifier of the operation point, the avg-framerate indicates an average frame rate of the operation point, the width indicates a width of a video frame corresponding to the operation point, the height indicates a height of a video frame corresponding to the operation point, the avg-bitrate indicates an average bit rate of the operation point, and the max-bitrate indicates a maximum bit rate of the operation point.

The values of the layer-ID, temporal-ID, dependency-ID, and quality-ID of the operation point are respectively the same as the values of the layer-ID, temporal-ID, dependency-ID, and quality-ID of a layer corresponding to the operation point and having a highest decoding dependency. It can be seen that, the operation point may be either identified by a combination of a dependency_id(D), a temporal_id(T), and a quality_id(Q) or identified by a layer_id, and one layer_id corresponds to one combination of D, T, and Q. An operation point corresponds to a layer and all layers dependent by the layer, that is, a bit stream formed by all NAL (Network Abstraction Layer, network abstraction layer) packets whose (D, T, Q) values are respectively smaller than or equal to the (D, T, Q) value of this operation point. Therefore, one operation point corresponds to a bit stream that can be decoded independently and has specific media features, that is, one operation point corresponds to one substream. In this way, if the terminal needs to control a substream, the terminal directly uses the (D, T, Q) value or layer-ID value of the corresponding operation point as identification information of the substream and sends the identification information to the server. Correspondingly, the server obtains the (D, T, Q) value or layer-ID value of the operation point by parsing. If the (D, T, Q) value of the operation point is obtained by parsing, the server may directly use NAL packets whose (D, T, Q) values are respectively smaller than or equal to the (D, T, Q) value obtained by the server by parsing, to form media data of the substream. For example, if the (D, T, Q) value obtained by the server by parsing the control request message of the terminal is (1, 1, 0), the server extracts NAL packets whose (D, T, Q) values are (1, 1, 0), (1, 0, 0), (0, 1, 0), or (0, 0, 0) to form media data of the substream. Alternatively, if the server obtains the layer-ID value of the operation point by parsing, the server may first translate the layer-ID value into the (D, T, Q) value, and then use NAL packets whose (D, T, Q) values are smaller than or equal to the (D, T, Q) value obtained by the server by parsing, to form the media data of the substream. The server translates the layer-ID value into the (D, T, Q) value by querying a mapping between the layer-ID value and the (D, T, Q) value. The mapping between the layer-ID value and the (D, T, Q) value may be pre-stored on the server, for example, stored in the SDP file, or stored in a scalability information SEI message of an SVC bit stream.

With respect to MVC, to declare which substreams are included in an MVC bit stream for the terminal, the server may also use parameters in the SDP file to declare the view_id value of each view and the temporal_id value of the temporal layer of each view that are included in the MVC bit stream for the terminal, and specify which temporal layers of which views may be combined into a substream. In this way, the terminal may directly use the temporal_id and view_id values of each temporal layer of each view corresponding to a desired substream as identification information of the substream and send the identification information to the server, and correspondingly, the server may obtain data corresponding to each temporal layer of each view after obtaining the temporal_id and view_id by parsing.

In an actual application, parameters in an SDP file may also be used to declare which operation points are included in an MVC bit stream for the terminal. A specific manner may be: using a parameter sprop-mvc-operation-point-info in an attribute line a=fmtp to carry a group of operation point description vector, where an operation point description vector is used to declare an operation point. The format of an operation point description vector may be: <operation-point-id, temporal-id, num-target-output-views, 1*target-output-view-id, profile-level-id, avg-framerate, avg-bitrate, max-bitrate>, where, the operation-point-id indicates an identifier of an operation point, the temporal-ID indicates a temporal identifier of the operation point, the num-target-output-views indicates the number of target output views of the operation point, the view-id indicates an identifier of a target output view of the operation point, the profile-level-ID indicates a profile level identifier of the operation point, the avg-framerate indicates an average frame rate of the operation point, the width indicates a width of a video frame corresponding to the operation point, the height indicates a height of a video frame corresponding to the operation point, the avg-bitrate indicates an average bit rate of the operation point, and the max-bitrate indicates a maximum bit rate of the operation point.

The temporal-id and target-output-view-id of the operation point are respectively the same as the temporal_id of a layer of a highest temporal level among all temporal layers of all views corresponding to the operation point and the view_id of a target output view corresponding to the operation point. It can be seen that, the operation point may be either identified by a temporal_id and a group of view_id (view_id of target output view), or identified by an operation_point_id. However, the operation point corresponds to a bit stream formed by all NAL packets whose temporal_id values (corresponding to frame rates) are smaller than or equal to the temporal_id value, and whose view_id value is equal to any one in the group of view_id values or any one of the view_id values of all views that any one view corresponding to the group of view_id values is dependent (directly dependent or indirectly dependent) upon during decoding. Therefore, one operation point corresponds to a bit stream that can be decoded independently and has specific media features, that is, one operation point corresponds to one substream. Therefore, the terminal may also carry the temporal_id of the operation point corresponding to the substream and a group of view_id (view_id of target output views) the operation point corresponding to the substream, or carry the operation-point-id of the operation point corresponding to the substream as identification information of the substream in a control request message. Definitely, the server finally needs to find specific data corresponding to the substream according to the specific temporal-id and view_id values. Therefore, when the terminal uses the operation_point_id as identification information of the substream, the server further determines the temporal_id corresponding to the operation point and the view_id of a group of target output views corresponding to the operation point according to a mapping among the operation_point_id, the temporal_id, and the target_output_view_id. Multiple methods are available for obtaining the mapping. For example, the mapping may be obtained from substream declaration information in a corresponding SDP file, or obtained from a view scalability info SEI message of an MVC bit stream stored on the server. To determine the media data of the substream, the server further needs to determine, according to a decoding dependency between views, the view_id of views that the target output views in the group are dependent (directly dependent or indirectly dependent) upon during decoding. The decoding dependency may be obtained according to metadata in an MVC file (an MVC bit stream is stored on the server in the form of a file, where the file includes not only the MVC bit stream but also metadata used to describe the MVC file), for example, obtained according to a ViewIdentifierBox. In corresponding media resources, all NAL packets whose temporal_id values in the packet headers are smaller than or equal to the obtained temporal_id value and whose view_id value is equal to a value in a group of view_id values obtained by the server (view_id values of target output views and view_id values of views that the target output views are dependent upon during decoding) form media data of the substream.

Definitely, if description information is not sent in an SDP file format, a header field carrying substream declaration information of a media stream may be generated for the server, and the header field is carried in a response message to a description information request message. In this way, the terminal may learn the substream declaration information by parsing the header field carried in the response message.

Specifically, the description information request message is an RTSP Describe request message, and the response message to the description information request message is an RTSP Describe success response message. When the server uses the header field in the RTSP Describe success response message to carry substream declaration information, for a media stream including substreams, the substream declaration information may include the URI of the media stream to which the substreams belong and a group of operation point description vector (which may be consistent with the foregoing operation point description vector), where each operation point description vector declares one operation point (each operation point corresponds to one substream). If substreams are included in multiple media streams, the header field carries a group of substream declaration information respectively corresponding to different media streams. A special character is used to separate substream declaration information of different media streams, so that the server can distinguish the substream declaration information. This may be implemented by a syntactic definition. In an Internet standard, an ABNF is generally used to describe a syntactic definition. Specifically, an ABNF is used to describe the syntactic definition of a header field carrying substream declaration information, as described below. A "semicolon" is used to separate substream declaration information of different media streams. In this way, when the terminal parses the header field, the terminal may distinguish substream declaration information of the media stream one by one according to the "semicolon".

```
substream-info = "substream-info"HCOLON [substream-info-spec
            * (SEMI substream-spec)]
           substream-info-spec = stream-url substream-type 1*descriptor-vector
           stream-url = <as defined in draft-ietf-mmusic-rfc2326bis-27>
           substream-type = "type" EQUAL substream-type-value
           substream-type-value ="SVC" / "MVC" / substream-type-value-ext
           substream-type-value-ext = token
          descriptor-vector = RAQUOT layer_id_value COMMA temporal_id_value
                     COMMA dependency_id_value COMMA quality_id_value
                     COMMA profile_level_id_value
                     COMMA avg_framerate_value
                     COMMA width_value COMMA height_value COMMA
                     avg_bitrate_value COMMA max_bitrate_value LAQUAT
                     / RAQUOT operation_point_id_value COMMA
                     temporal_id_value
                     COMMA num_target_output_views_value
                     1* (COMMA target_output_view_id_value)
            COMMA profile_level_id_value
            COMMA avg_framerate_value
            COMMA avg_bitrate_value COMMA max_bitrate_value
            LAQUAT
                   / descriptor-vector-ext
          layer_id_value = 1*4DIGIT; 0∼2047
          dependency_id_value = DIGIT ; 0∼7
          temporal_id_value = DIGIT ; 0∼7
          quality_id_value = 1*2DIGIT; 0∼15
          profile_level_id_value = *HEX
           avg_frame_rate_vale = *DIGIT
          width_value = *DIGIT
          height_value *DIGIT=
           avg_bitrate_value *DIGIT=
          max_bitrate_value = *DIGIT
           operation_point_id_value = 1*5DIGIT; 0∼65535
          num_target_output_views_value = 1*4DIGIT; 0∼1023
          target_output_view_id_value = 1*4DIGTT; 0∼1024
          descriptor-vector-ext = token
          HCOLON= *(SP / HT) ":" SWS
           SWS= [LWS] ; Separating White Space
          LWS= [CRLF] 1*( SP / HT) ; Line-breaking White Space
          DIGIT= %x30-39 ; any US-ASCII digit "0".."9"
          HT= %x09 ; US-ASCII HT, horizontal-tab (9)
          SP= %x20 ; US-ASCII SP, space (32)
          COMMA=SWS "," SWS ; comma
          EQUAL=SWS "=" SWS ; equal
          DQ=%x22 ; US-ASCII double-quote mark (34)
          RAQUOT = ">" SWS ; right angle quote
          LAQUOT =SWS "<" ; left angle quote
          SEMI = SWS ";" SWS ; semicolon
          HEX= DIGIT / "A" / "B" / "C" / "D" / "E" / "F" / "a" / "b" / "c" / "d" / "e" / "f"
          token= 1*(%x21 / %x23-27 / %x2A-2B / %x2D-2E / %x30-39
                           / %x41-5A / %x5E-7A / %x7C / %x7E)
                        ; 1*<any CHAR except CTLs or tspecials>
```

After the terminal receives an RTSP Describe success response message, the terminal parses the header field carrying substream declaration information to obtain the URI of a media stream including a substream and corresponding identification information of the substream. After the URI of the media stream and identification information of the substream are obtained, the URI of the media stream and identification information of the substream may be carried in a control request message and sent to the server. In a specific implementation, in different application scenarios, the positions of the URI of the media stream and identification information of the substream in a control request message may vary. This will be described in detail hereinafter.

In one of existing media-stream-based control manners, the terminal may perform independent control based on a single media stream, for example, independently control a video stream and an audio stream of a video program. In the case of independent control, possible disadvantages are as follows: Many interactions are required, and when independent control is performed, control requests arrive at the server in sequence, and the server may return responses in sequence. To ensure synchronous playing of an audio and a video, the terminal can perform a corresponding operation only after the terminal receives responses of all media streams. Therefore, a long waiting delay is caused. Therefore, in some other application scenarios, aggregate control may be performed for multiple media streams (that is, one control request message is used to control multiple media streams). When the terminal sends a control request message, a request-uri field is included in the message. In the case of independent control, the field carries a URI of a media stream, and in the case of aggregate control, the field generally carries a URI for aggregate control. It should be noted that, with respect to the URI of a media stream, as mentioned above, the terminal may obtain it from a response message returned by the server in response to a description information request message. With respect to the URI for aggregate control, if the server supports aggregate control, the server may carry the URI for aggregate control in an SDP file when the server returns a response message to a description information request message to the terminal, and the position of the URI for aggregate control in the SDP file is generally different from positions of URIs of media streams, for example, the URI for aggregate control is generally located uppermost among the URIs of all media streams. Therefore, the terminal may also obtain the URI for aggregate control from the SDP file.

Therefore, if independent control is performed based on a media stream, it is still feasible to carry the URI of a media stream to which a substream belongs in a request-uri field of a control request message. With respect to identification information of the substream, a header field carrying identification information of the substream (for example, a substream header field) may be generated and carried in a control request message. In an Internet standard, an ABNF is generally used to describe a syntactic definition. Therefore, an ABNF is used to describe the syntactic definition of a header field carrying identification information of the substream.

```
           substream = "substream"HCOLON [substream-spec
           * (COMMA substream-spec)]
           substream-spec = substream-type COMMA substream-id
           substream-type = "type" EQUAL substream-type-value
           substream-type-value ="SVC" / "MVC" / substream-type-value-ext
           substream-type-value-ext = token
           substream_id = layer-id
                     / dependency-id temporal-id quality-id
                     / mvc-operation-point-id
                     / temporal-id 1*target-output-view-id
                   / substream-id-ext
          layer-id = "layer_id" EQUAL layer_id_value
          layer_id_value = 1*4DIGIT; 0∼2047
          dependency-id = "dependency_id" EQUAL dependency_id_value
          dependency_id_value = DIGIT ; 0∼7
          temporal-id = "temporal_id" EQUAL temporal_id_value
          temporal_id_value = DIGIT ; 0∼7
          quality-id = "quality_id" EQUAL quality_id_value
          quality_id_value = 1*2DIGIT; 0∼15
          mvc-operation-point-id ="operation_point_id" EQUAL operation_point_id_value
          operation_point_id_value = 1*5DIGIT; 0∼65535
          target-output-view-id = "view_id" EQUAL view_id_value
          view_id_value = 1*4DIGIT; 0∼1024
           substream-id-ext = token
          HCOLON= *( SP / HT) ":" SWS
          SWS= [LWS] ; Separating White Space
          LWS= [CRLF] 1*(SP / HT) ; Line-breaking White Space
          DIGIT= %x30-39 ; any US-ASCII digit "0".."9"
          HT= %x09 ; US-ASCII HT, horizontal-tab (9)
           SP= %x20 ; US-ASCII SP, space (32)
          COMMA= SWS "," SWS ; comma
          EQUAL= SWS "=" SWS ; equal
          DQ= %x22 ; US-ASCII double-quote mark (34)
          token = 1*(%x21 / %x23-27 / %x2A-2B / %x2D-2E / %x30-39
                         / %x41-5A / %x5E-7A / %x7C / %x7E)
                     ; 1*<any CHAR except CTLs or tspecials>
```

For example, an instance is substream: type = svc; layer_id = 1. If a control request message carries the header field, it is a play control request for a substream whose layer_id is 1 in a media stream that carries an SVC bit stream. Correspondingly, in the case of independent control based on a media stream, after the server receives a control request message from the terminal, the server may parse a request-uri field of the control request message to obtain the URI of a media stream to which a substream belongs, and parse a header field of the control request message to obtain identification information of the substream.

Definitely, in the case of independent control based on a media stream, the identification information of the substream may also be carried in the request-uri field of the control request message, so that the server can parse the request-uri field of the control request message to obtain the URI of the media stream to which the substream belongs and identification information of the substream.

With respect to aggregate control, the server still needs to know the URI of the media stream to which the substream belongs and identification information of the substream before the server can determine data corresponding to the substream. In the case of aggregate control based on multiple media streams, a "request-uri" field in a request line in a control request message is an RTSP URI for aggregate control. Therefore, in the case of aggregate control, a header field carrying both the URI of the media stream to which the substream belongs and identification information of the substream may be generated and carried in a control request message. In this way, the server may parse the header field of the control request message to obtain the URI of the media stream to which the substream belongs and identification information of the substream and further determine the data corresponding to the substream.

It should be noted that, in the case of aggregate control, one control request involves multiple media streams. In a specific implementation, substream control may be performed for every involved media stream, or substream control may be performed for only one or more media streams. When it is required in a control request to perform substream control for multiple media streams, and a header field of the control request message carries identification information of a substream and the URI of a media stream to which the substream belongs, the two pieces of information may appear in groups (one media stream corresponds to one group), and the groups may be separated by a special character, so that the server can distinguish the information. This may be implemented by a syntactic definition. For example, the syntactic definition of a header field described by an ABNF is as follows:

```
           substream = "substream"HCOLON [stream-uri][substream-spec*(COMMA
           substream-spec)] *(SEMI [stream-uri][substream-spec*(COMMA substream-spec)])
           SEMI = SWS ";" SWS ; semicolon
```

In the SEMI, [stream-url] corresponds to the URI of a media stream, and [substream-spec*(COMMA substream-spec)] corresponds to identification information of a substream. When it is necessary to perform substream control for two media streams (stream1 and stream2), the header field may be expressed as follows: [stream1-url][substream-spec*(COMMA substream-spec)]; [stream2-url][substream-spec*(COMMA substream-spec)]. It can be seen that, different media streams may be separated by a "semicolon", so that when the server parses the header field, the server can distinguish media streams one by one according to the "semicolon".

It should be additionally noted that, in an actual application, media streams of multiple coding types may coexist in the system. For example, some media streams may be encoded by SVC, and some media streams may be encoded by MVC. When different coding types are used for media streams, the identification information of a substream is generally indicated in different manners. To simplify the identification process of the server, coding type information of the substream may be carried in the control request message. In a specific implementation, a "substream_id" field may be added in a header field for carrying identification information of the substream, and a specific type value is carried in the field.

S104. Perform, based on the media data, a control operation requested by the terminal, for the substream.

For media data such as a video program, the control request message is generally referred to as a control request message operation. The control may specifically include play control, pause control, fast forward control, rewind control, and so on.

To sum up, according to the embodiment of the present invention, independent control can be implemented for data of different features under the same type even in the case where the data of different features is transmitted through the same media stream.

In an actual application, it is possible that identification information of a substream carried in a control request message sent by a terminal is incorrect. Many causes may lead to this phenomenon. For example, one possible cause is: as mentioned above, the terminal may obtain description information of a media content in multiple ways; however, when the terminal obtains the description information in a certain manner in advance (for example, through the HTTP protocol or an e-mail), and obtains identification information of a substream from the description information, because a long interval may exist between the time of obtaining the identification information and the actual time of sending a control request, if the server updates the identification information of the substream in this period and the terminal sends a request according to previously obtained information, the carried information may be incorrect.

To deal with this case, in the embodiment of the present invention, after the server obtains the identification information of the substream by parsing the control request message, if the identification information of the substream is found to be incorrect (for example, it is found that the identification information of the substream obtained by parsing does not exist in a database of the server, which proves that the identification information of the substream sent by the terminal is incorrect), an error response may be returned to the terminal, and correct specification information of each stream may be carried in the error response (likewise, a manner of carrying information in a message body or header field of a response message may be used; the specific manner may be similar to that of carrying information such as identification information of a substream in a control request message, and is not further described herein). In this way, the terminal may parse the response message to obtain correct substream declaration information, obtain identification information of a substream that requires substream control, and then resend a control request message, where the control request message carries the correct identification information of the substream and URI of the media stream to which the substream belongs.

In addition, in an actual application, it is possible that some servers do not support substream-based media control. If a control request message carrying identification information of a substream is sent to those servers, those servers are unable to identify a header field carrying the identification information of the substream, and consequently, the control finally turns into control based on the entire media stream (because the control request message also carries such information as the URI of a media stream).

To avoid the foregoing case, the embodiment of the present invention further provides a corresponding solution. For example, in one implementation manner, when the terminal sends a control request message, a substream control feature tag may be carried in the control request message, and the server can obtain the substream control feature tag from the control request message. After the server obtains the substream control feature tag, if the server supports substream control, the server can correctly identify the newly generated header field (a header field carrying identification information of a substream) in the control request message, and perform substream-based media control according to the foregoing procedure. Definitely, if the server itself does not support substream control, after obtaining the substream control feature tag, the server cannot identify the tag correctly. Therefore, the server may reject the control request of the terminal, and return a response message to the terminal, where the response message carries information indicating that substream control is not supported, instead of performing control based on the entire media stream.

In a specific implementation, the substream control feature tag may be carried in a require header field of a control request message. The require header field is a header field defined in an existing protocol. All servers, whether supporting substream control or not, can parse the header field. By parsing the header field, the server may obtain the substream control feature tag. If the server supports substream control, the server can correctly identify the substream control feature tag carried therein, and further may parse a field carrying information such as an identification information of a substream to obtain the identification information such as the identifier of the substream, and perform substream-based media control according to the foregoing procedure. If the server does not support substream control, the server cannot correctly obtain the substream control feature tag by parsing, and further may reject the control request of the terminal, and return a response message to the terminal, where the response message includes an unsupported header field carrying the substream control feature tag that cannot be identified by the server. After receiving the response message, the terminal parses the unsupported header field therein, and obtains the substream control feature tag, so as to learn that the server does not support substream control. Definitely, the substream control feature tag may also be carried in other defined header fields.

In another implementation manner, before the terminal sends a control request message, the terminal generally needs to send an RTSP SETUP request message to the server, requesting to determine a transmission mechanism for a substream to be controlled or set up an RTSP session or add a media stream to an existing RTSP session; and the terminal can perform a subsequent control operation only after receiving an RTSP SETUP success response message. Therefore, in the embodiment of the present invention, a substream control feature tag may be carried in an RTSP SETUP request message, so that after the server receives the RTSP SETUP request of the terminal, the server can obtain the substream control feature tag by parsing the RTSP SETUP request message. Afterward, if the server supports substream control, the server may send a response message that carries information indicating that substream control is supported to the terminal. In this way, the terminal may be notified that the server supports substream control, and the terminal may subsequently send a substream control request to the server. Definitely, if the server does not support substream control, after the server obtains the substream control feature tag, the server may return a response message that carries information indicating that substream control is not supported to the terminal, so that the terminal does not initiate a substream control request when initiating a control request to the server.

In this manner of carrying a substream control feature tag in an RTSP SETUP request message, in a specific implementation, the substream control feature tag may be carried in a support header field of an RTSP SETUP request. The support header field is a header field defined in an existing protocol and can be parsed by the server. Using the header field to carry the substream control feature tag may ensure that the server can obtain the substream control feature tag. In this way, the server can obtain the substream control feature tag by parsing the header field. If the server supports substream control, the server can correctly identify the substream control feature tag carried therein, and further, a response message to an RTSP SETUP request may also include a support header field carrying a substream control feature tag, notifying the terminal that the server supports substream control. If the server does not support substream control, the server cannot correctly identify the substream control feature tag obtained by parsing, and further, a response message to an RTSP SETUP request may include an unsupported header field, which carries the substream control feature tag that cannot be identified by the server. After receiving the response message, the terminal parses the unsupported header field therein, and obtains the substream control feature tag, so as to learn that the server does not support substream control. Definitely, the substream control feature tag may also be carried in other defined header fields.

The media data control method provided by the embodiment of the present invention has been described above. It should be noted that the embodiment of the present invention is not only applicable to substream control in SVC and MVC, but also applicable to other applications involving substream control. For example, when multiple substreams are included in media data, and load formats of different substreams are different, a load format may be used as identification information of a substream. For another example, when multiple substreams are included in media data, and SSRCs (Synchronization Source, synchronization source) of different substreams are different, a source SSRC may be used as identification information of a substream. For better understanding of the embodiment of the present invention, the following uses an example to describe in detail the media data control method provided by the embodiment of the present invention.

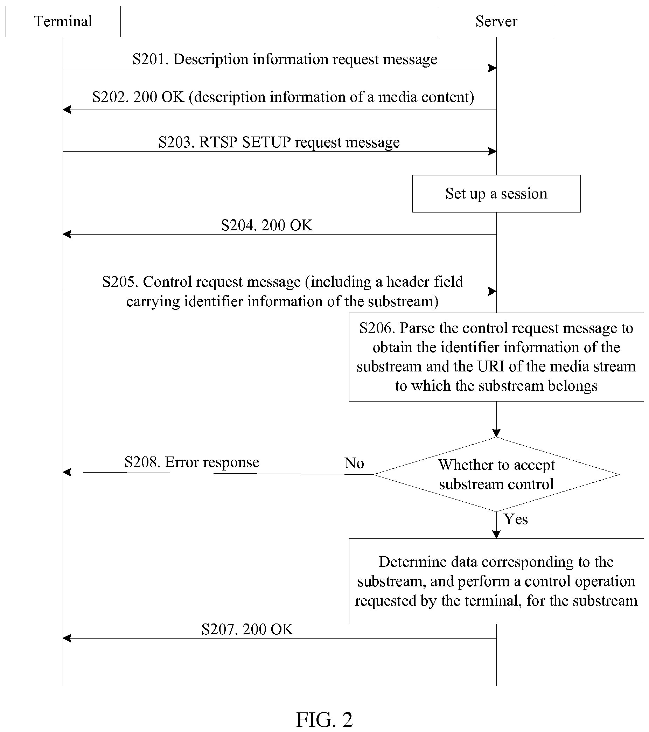

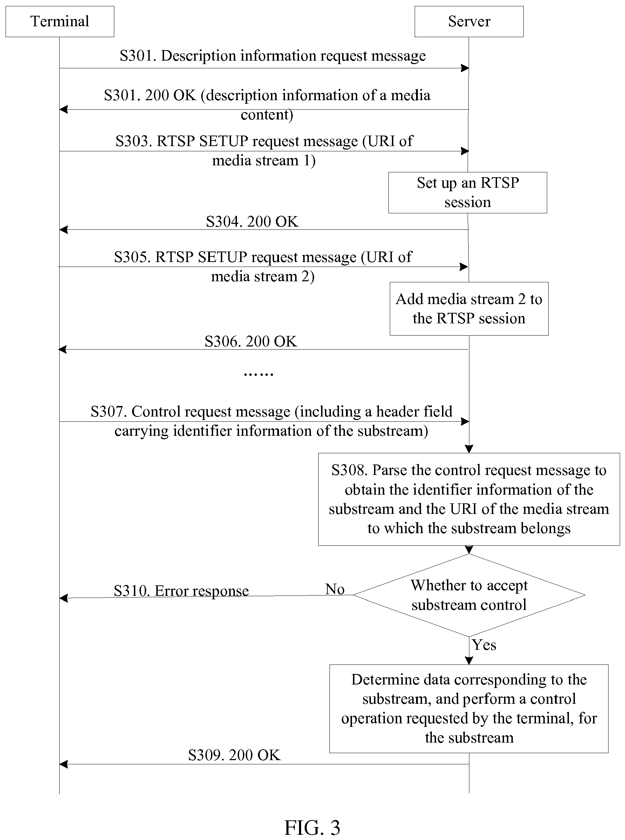

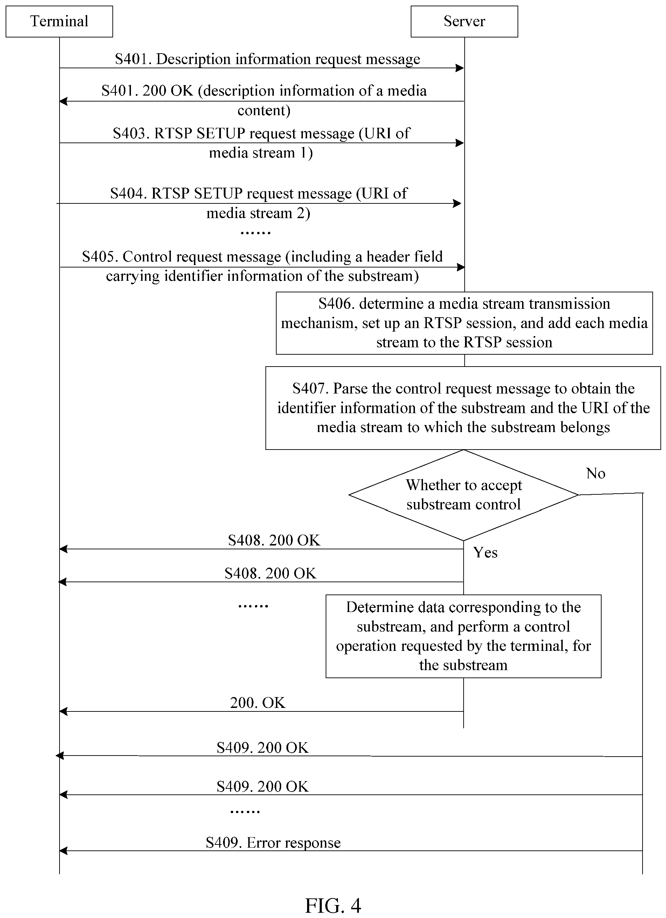

First, it should be noted that, in this example, assuming that a media content is a video program, and in addition to a control request message, assuming that control is performed based on a single media stream, referring to FIG. 2, the method may include the following steps:
S201. A terminal sends a describe information (Describe) request message to a server, requesting to obtain description information of a media content from the server. A request-uri field in the Describe request message is a URI of the media content.
S202. The server sends a 200 OK response message to the terminal, where the response message includes the description information of the media content. The description information of the media content may include: the number of media streams, an RTSP URI of each media stream, a protocol used to deliver each media stream, a transmission protocol parameter, media coding information, and so on.
   If the description information is sent in an SDP file format, substream declaration information of the media streams may also be directly included in the file. Otherwise, a new header field may be generated for the response message, and the substream declaration information may be carried in the header field. In addition, the terminal may obtain the description information of the media content in other manners.
S203. The terminal sends an RTSP SETUP request message to the server according to the description information of the media content, requesting to determine a transmission mechanism for a media stream and set up an RTSP session. The request-uri field of the RTSP SETUP request message indicates the RTSP URI of the media stream to be set up and controlled. The RTSP SETUP request message further includes a transmission parameter of the media stream.
S204. The server determines whether a media resource corresponding to the RTSP URI in the RTSP SETUP request message is available, whether the transmission parameter is acceptable, and so on. The server sets up an RTSP session, generates an RTSP session identifier, and sends a 200 OK response message to the terminal, where the 200 OK response message includes the session identifier.
S205. The terminal sends a control request message to the server. The control request message includes a header field carrying identification information of a substream. The identification information of the substream is used to determine media data of the substream. In different scenarios, identification information of a substream may vary. For example, if a media stream carries an SVC bit stream, the identification information of a substream may be a layer-id, or a combination of a dependency-id, a temporal-id, and a quality-id. If a media stream carries an MVC bit stream, the identification information of a substream may be an operation-point-id or a combination of a temporal-id and a view-id. The request-uri in the control request message indicates the RTSP URI of the media stream to which the substream belongs that requires play control. In addition, the control request message further carries the session identifier obtained in S204, where the session identifier is used to identify which RTSP session the request is used for. The control request message may be a play (RTSP PLAY) request message or a pause (RTSP PAUSE) request message and so on.
S206. The server processes the control request message, parses the request-uri in the control request message to obtain the RTSP URI of the media stream, and parses the header field carrying the identification information of the substream to obtain the identification information of the substream.
S207. If the server accepts the substream play control request, the server sends a 200 OK response message to the terminal. The server determines the media resource according to the RTSP URI of the media stream obtained in S206, determines the media data of the substream in the media resource according to the identification information of the substream, and performs a requested play control operation for the media data of the substream. For example, if the play control request is an RTSP PLAY request message, the server sends the media data of the substream to the terminal; and if the play control request is an RTSP PAUSE request message, the server stops sending the media data of the substream to the terminal.
S208. If the server does not accept the substream play control request, the server sends an error response message to the terminal.
   With respect to the case of aggregate control, an example is used in the following application to provide a detailed description. Generally, aggregate control differs from control based on a single media stream in that, in the case of aggregate control, a substream header field in a control request message not only carries identification information of a substream, but also carries an RTSP URI of a media stream to which the substream belongs. Specifically, according to the different manners of setting up an RTSP session, the substream control procedure in aggregate control may vary. In one manner of setting up an RTSP session, referring to FIG. 3, the method may mainly include the following steps (a video program is still used as an example):
S301. A terminal sends a Describe request message to a server, requesting to obtain description information of a media content from the server. A request-uri in the Describe request message is a URI of the media content.
S302. The server sends a 200 OK response message to the terminal, where the response message includes the description information of the media content. The description information of the media content includes: a URI for aggregate control, the number of media streams, an RTSP URI of each media stream, a protocol used to deliver each media stream, a transmission protocol parameter, media coding information, and so on. In addition, substream declaration information of the media streams may also be included.
S303. The terminal sends an RTSP SETUP request message to the server according to the description information of the media content, requesting to determine a transmission mechanism for media stream 1 and set up an RTSP session. The request-uri field of the RTSP SETUP request message indicates the RTSP URI of media stream 1. The RTSP SETUP request message further includes a transmission parameter of the media stream.
S304. The server determines whether a media resource corresponding to the RTSP URI field of the RTSP SETUP request message is available, whether the transmission parameter is acceptable, and so on. The server sets up an RTSP session, generates an RTSP session identifier, and sends a 200 OK response message to the terminal, where the 200 OK response message includes the session identifier.
S305. The terminal sends an RTSP SETUP request message to the server according to the description information of the media content, requesting to determine a transmission mechanism for media stream 2. The request-uri field of the RTSP SETUP request message indicates the RTSP URI of media stream 2. The RTSP SETUP request message further includes a transmission parameter of the media stream. The RTSP SETUP request message includes the session identifier obtained in S304, indicating that media stream 2 will be added to an aggregate session, and that media stream 2 and an existing media stream (media stream 1) in the session will be jointly controlled.
S306. The server determines whether a media resource corresponding to the RTSP URI field of the RTSP SETUP request message is available, whether the transmission parameter is acceptable, and so on. The server adds the corresponding media stream to the aggregate session, and sends a 200 OK response message to the terminal.
   If the media content further includes other media streams, S305 and S306 are repeated, until all media streams are processed, where, the request-uri is replaced with the RTSP URI of another media stream, and the corresponding transmission parameter is replaced with the transmission parameter of the media stream.
S307. The terminal sends a control request message to the server. The request-uri in the control request message is the URI for aggregate control. The control request message includes a header field carrying a URI of a media stream to which a substream belongs and identification information of the substream. The session identifier obtained in S304 is also included and used to identify which RTSP session the request is used for. The control request message may be a PLAY request message or a PAUSE request message.
S308. The server processes the control request message, and parses the header field carrying the URI of the media stream to which the substream belongs and identification information of the substream to obtain the RTSP URI of the media stream and identification information of the substream.
S309. If the server accepts the substream play control request, the server sends a 200 OK response message to the terminal. The server determines the media resource according to the RTSP URI of the media stream obtained in S308, determines the media data of the substream in the media resource according to the identification information of the substream, and performs a requested play control operation for the media data of the substream. If the play control request is a PLAY request message, the server sends the media data of the substream to the terminal; and if the play control request is a PAUSE request message, the server stops sending the media data of the substream to the terminal.
S310. If the server does not accept the substream play control request, the server sends an error response message to the terminal.
   In another manner of setting up an RTSP session, the server processes an RTSP SETUP request in a different manner. Correspondingly, the substream control procedure is also slightly different. Referring to FIG. 4, the method may mainly include the following steps:
S401. A terminal sends a Describe request message to a server, requesting to obtain description information of a media content from the server. A request-uri in the Describe request message is a URI of a media content of interest.
S402. The server sends a 200 OK response message to the terminal, where the response message includes the description information of the media content. The description information of the media content includes: a URI for aggregate control, the number of media streams, an RTSP URI of each media stream, a protocol used to deliver each media stream, a transmission protocol parameter, media coding information, and so on. Substream declaration information of the media streams may also be included.
S403. The terminal sends an RTSP SETUP request message to the server according to the description information of the media content, requesting to determine a transmission mechanism for media stream 1 and set up an RTSP session. The request-uri field of the RTSP SETUP request message indicates the RTSP URI of media stream 1. The RTSP SETUP request message further includes a transmission parameter of the media stream and a pipelined-requests header field, where the header field is used to carry and uniquely indicate a group of pipelined request messages. The pipelined request messages refer to that all request messages may be sent in sequence, without waiting for a response to a previous request message before a next request message is sent.
S404. The terminal sends an RTSP SETUP request message to the server according to the description information of the media content, requesting to determine a transmission mechanism for media stream 2. The request-uri field of the RTSP SETUP request message indicates the RTSP URI of media stream 2. The RTSP SETUP request message further includes a transmission parameter of the media stream. The RTSP SETUP request message further includes a pipelined-requests field, the value of which is the same as the value of the pipelined-requests header field in S403.
   If the media content further includes other media streams, S404 is repeated, until all media streams are processed, where, the request-uri is replaced with the RTSP URI of another media stream, and the corresponding transmission parameter is replaced with the transmission parameter of the media stream. A pipelined-requests field is also included, the value of which is the same as the value of the pipelined-requests header field in S403.
S405. The terminal sends a control request message to the server. The request-uri in the control request message is the URI for aggregate control. The control request message includes a header field carrying a URI of a media stream to which a substream belongs and identification information of the substream. The session identifier obtained in S404 is also included and used to identify which RTSP session the request is used for. The control request message may be an RTSP PLAY request message or an RTSP PAUSE request message. The control request message further includes a pipelined-requests field, the value of which is the same as the value of the pipelined-requests header field in S403.
S406. The server determines whether a media resource corresponding to an RTSP URI in a first RTSP SETUP request message in the group of pipelined request messages is available, whether the transmission parameter is acceptable, and so on. The server sets up an RTSP session, and generates an RTSP session identifier. The server determines whether a media resource corresponding to an RTSP URI in a second RTSP SETUP request message in the group of pipelined request messages is available, whether the transmission parameter is acceptable, and so on. Then the server adds the corresponding media stream to the aggregate session. If the media content further includes other media streams, that is, the group of pipelined request messages further includes other RTSP SETUP request messages, the server determines whether media resources corresponding to RTSP URIs in the other RTSP SETUP request messages are available, whether transmission parameters are acceptable, and so on. Then the server adds the corresponding media streams to the aggregate session. The step is repeated until all media streams are processed, that is, all RTSP SETUP request messages in the group of pipelined request messages are processed.
S407. The server processes the control request message, and parses the header field carrying the URI of the media stream to which the substream belongs and identification information of the substream to obtain the RTSP URI of the media stream and identification information of the substream.
S408. If the server accepts the substream play control request, the server sends a 200 OK response message corresponding to each RTSP SETUP request message in the group of pipelined request messages to the terminal in sequence, where the response message includes the session identifier generated in S406. The server sends a 200 OK response message corresponding to each control request message in the group of pipelined request messages to the terminal. The server determines the media resource according to the RTSP URI of the media stream obtained in S407, determines the media data of the substream in the media resource according to the identification information of the substream, and performs a requested play control operation for the media data of the substream. If the play control request is an RTSP PLAY request message, the server sends the media data of the substream to the terminal; and if the play control request is an RTSP PAUSE request message, the server stops sending the media data of the substream to the terminal.
S409. If the server does not accept the substream play control request, the server sends a 200 OK response message corresponding to each RTSP SETUP request message in the group of pipelined request messages to the terminal in sequence, where the response message includes the session identifier generated in step 406. The server sends an error response message corresponding to each control request message in the group of pipelined request messages to the terminal.

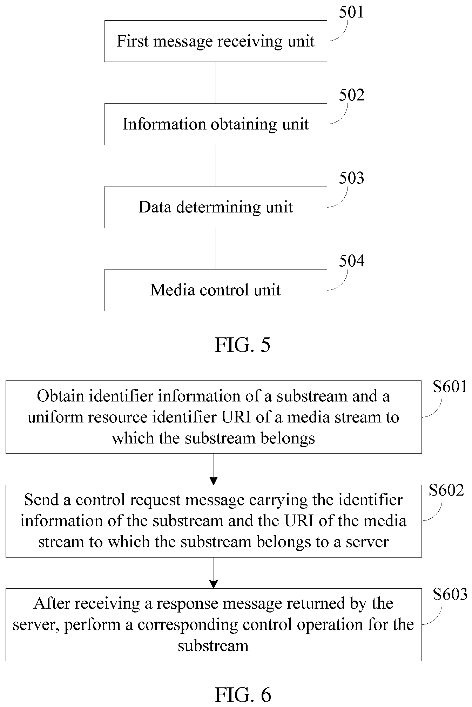

Corresponding to the media data control method provided by the embodiment of the present invention, an embodiment of the present invention further provides a media data control apparatus. The apparatus is located on a server side. Referring to FIG. 5, the apparatus includes:
a first message receiving unit 501, configured to receive a control request message sent by a terminal, where the control request message carries identification information of a substream and a uniform resource identifier URI of a media stream to which the substream belongs,
where, the control request message includes a real time streaming protocol RTSP PLAY request message or an RTSP PAUSE request message;
an information obtaining unit 502, configured to obtain the identification information of the substream and the URI of the media stream to which the substream belongs;
a data determining unit 503, configured to determine, according to the identification information of the substream and the URI of the media stream to which the substream belongs, media data of the substream; and
a media control unit 504, configured to perform, based on the media data, a control operation requested by the terminal, for the substream.

When the control request message is an independent control request message based on a single media stream, the identification information of the substream is carried by a header field of the control request message, and the URI of the media stream to which the substream belongs is carried by a request-uri field of the control request message; in this case, the information obtaining unit 502 may specifically parse the header field of the control request message to obtain the identification information of the substream, and parse the request-uri field of the control request message to obtain the URI of the media stream to which the substream belongs.

Alternatively, when the control request message is an independent control request message based on a single media stream, both the identification information of the substream and the URI of the media stream to which the substream belongs may be carried by a request-uri field of the control request message; in this case, the information obtaining unit 502 may specifically parse the request-uri field of the control request message to obtain the identification information of the substream and the URI of the media stream to which the substream belongs.

When the control request message is an aggregate control request message based on multiple media streams, both the identification information of the substream and the URI of the media stream to which the substream belongs may be carried by a header field of the control request message; in this case, the information obtaining unit 502 may specifically parse the header field of the control request message to obtain the identification information of the substream and the URI of the media stream to which the substream belongs.

To enable the terminal to obtain the identification information of the substream, after a description information request message sent by the terminal is received, when a response message is returned, substream declaration information may be carried in the response message . In this case, the apparatus may further include:
a second message receiving unit, configured to receive a description information request message sent by the terminal; and
a first responding unit, configured to return a response message carrying substream declaration information to the terminal, so that the terminal obtains the identification information of the substream according to the substream declaration information.

The substream declaration information may be carried in a message body or header field of the response message. That is to say, the substream declaration information may be used as a part of media description information, and the media description information is made into an SDP file. Alternatively, a header field may be generated for the response message, and the substream declaration information may be carried in the header field.

When the terminal sends a control request message, the identification information of the substream carried therein may be incorrect. Therefore, to ensure that substream control can be performed normally, the apparatus may further include:
an error control unit, configured to determine that the identification information of the substream carried in the control request message is incorrect, and return a response message carrying substream declaration information to the terminal, so that the terminal re-obtains identification information of the substream according to the substream declaration information carried in the response message and resends a control request message.

In an actual application, it is possible that some servers do not support substream control. To implement substream control correctly, in one manner, the control request message may further carry a substream control feature tag. In this case, the apparatus may further include:
a first substream control feature tag obtaining unit, configured to obtain the substream control feature tag; and
a first control unit, configured to: if the substream control feature tag can be identified correctly, trigger the message parsing unit to continue to perform the operation of obtaining the identification information of the substream and the URI of the media stream to which the substream belongs and subsequent, or otherwise, reject the control request, and return a response message that carries information indicating that substream control is not supported to the terminal.

The substream control feature tag may be carried in a require header field of the control request message.

Correspondingly, the first substream control feature tag obtaining unit may be specifically configured to parse the require header field of the control request message to obtain the substream control feature tag.

In another implementation manner, the substream control feature tag may also be carried in an RTSP SETUP request message, and the apparatus may further include:
a second substream control feature tag obtaining unit, configured to: receive an RTSP SETUP request message sent by the terminal, where the RTSP SETUP request message carries a substream control feature tag; and obtain the substream control feature tag; and
a second control unit, configured to: if the substream control feature tag can be identified correctly, return a response message that carries information indicating that substream control is supported to the terminal, so that the terminal initiates substream control; or otherwise, return a response message that carries information indicating that substream control is not supported to the terminal.

In a specific implementation, the substream control feature tag is carried in a support header field of the RTSP SETUP request message.

Correspondingly, the second substream control feature tag obtaining unit may be specifically configured to parse the support header field of the RTSP SETUP message to obtain the substream control feature tag.

In the case where multiple coding types coexist, to simplify the identification process of the server, the terminal may further carry coding type information of the substream when sending the control request message. In this case, the apparatus may further include:
a coding type obtaining unit, configured to obtain a coding type of the substream according to the coding type information of the substream, so as to determine the substream corresponding to the identification information of the substream according to the coding type. The apparatus embodiment is described on the basis of the foregoing method embodiments. For what is not detailed, reference may be made to the description of the method embodiments, and no repeated description is provided herein.

It is understandable to a person of ordinary skill in the art that all or a part of the steps in the foregoing method embodiments may be implemented by a program instructing relevant hardware. The program may be stored in a computer readable storage medium. When the program is executed, the following steps are included: receiving a control request message sent by a terminal, where the control request message carries identification information of a substream and a uniform resource identifier URI of a media stream to which the substream belongs; obtaining the identification information of the substream and the URI of the media stream to which the substream belongs; determining, according to the identification information of the substream and the URI of the media stream to which the substream belongs, media data of the substream; and performing, based on the media data, a control operation requested by the terminal, for the substream. The storage medium may be a ROM/RAM, a magnetic disk, a CD-ROM, and so on.

The embodiment of the present invention has been described above mainly from the perspective of a server. The following describes a media control method provided by an embodiment of the present invention from the perspective of a terminal. Referring to FIG. 6, the method includes the following steps:
S601. Obtain identification information of a substream and a uniform resource identifier URI of a media stream to which the substream belongs.
S602. Send a control request message carrying the identification information of the substream and the URI of the media stream to which the substream belongs to a server.
S603. After receiving a response message returned by the server, perform a corresponding control operation for the substream.

When the control request message is an independent control request message based on a single media stream, the identification information of the substream is carried by a header field of the control request message, and the URI of the media stream to which the substream belongs is carried by a request-uri field of the control request message; or when the control request message is an independent control request message based on a single media stream, both the identification information of the substream and the URI of the media stream to which the substream belongs are carried by a request-uri field of the control request message; or when the control request message is an aggregate control request message based on multiple media streams, both the identification information of the substream and the URI of the media stream to which the substream belongs are carried by a header field of the control request message.

Specifically, when it is necessary to obtain identification information of a substream and a URI of a media stream to which the substream belongs, a description information request message may be sent to the server, and the identification information of the substream and the URI of the media stream to which the substream belongs may be obtained from a response message that is returned by the server and carries substream declaration information. The substream declaration information may be carried in a message body or header field of the response message. Therefore, the terminal may parse the message body or header field of the response message to obtain the substream declaration information.

In an actual application, because the terminal may obtain identification information of a substream in other ways, identification information of a substream carried in the sent control request message may be incorrect; after the server detects the error, the server may return a response message carrying correct identification information of all substreams to the terminal. Therefore, after the terminal sends the control request message, if the terminal receives a response message that is returned by the server and carries substream declaration information, the terminal may re-obtain identification information of the substream according to the substream declaration information carried in the response message, and resend a control request message.

In addition, in an actual application, it is possible that some servers do not support substream control. Therefore, if no processing is performed, after the server receives a control request message from the terminal, processing may be performed based on the entire media stream even if information such as identification information of a substream is carried in the control request message. To avoid this phenomenon, in the embodiment of the present invention, when the terminal sends a control request message, the control request message may further carry a substream control feature tag, so that after the server receives the control request message, if substream control is not supported, the server cannot correctly identify the substream control feature tag, and then can further return a response message that carries information indicating that substream control is not supported to the terminal, instead of performing control based on the entire media stream.

In another implementation manner, when an RTSP SETUP request message is sent to the server, the RTSP SETUP request message may carry a substream control feature tag, so that when the server does not support substream control, the server returns a response message that carries information indicating that substream control is not supported to the terminal; definitely, if substream control is supported, the server may return a response message that carries information indicating that substream control is supported to the terminal. Correspondingly, if the terminal knows, by parsing the response message of the server, that the server supports substream control, the terminal may initiate a substream control request to the server; otherwise, if the terminal knows that the server does not support substream control, the terminal does not initiate a substream control request to the server.

In the case where multiple coding types coexist, to simplify the identification process of the server, the terminal may further carry coding type information of the substream in the control request message, so that the server obtains the coding type of the substream according to the coding type information of the substream and determines the substream corresponding to the identification information of the substream according to the coding type.

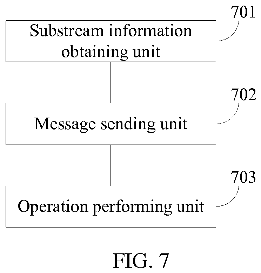

Corresponding to the foregoing method, an embodiment of the present invention further provides a media data control apparatus. Referring to FIG. 7, the apparatus includes:
a substream information obtaining unit 701, configured to obtain identification information of a substream and a uniform resource identifier URI of a media stream to which the substream belongs;
a message sending unit 702, configured to send a control request message carrying the identification information of the substream and the URI of the media stream to which the substream belongs to a server; and
an operation performing unit 703, configured to perform a corresponding control operation for the substream after a response message returned by the server is received.

When the control request message is an independent control request message based on a single media stream, the identification information of the substream is carried by a header field of the control request message, and the URI of the media stream to which the substream belongs is carried by a request-uri field of the control request message; or when the control request message is an independent control request message based on a single media stream, both the identification information of the substream and the URI of the media stream to which the substream belongs are carried by a request-uri field of the control request message; or when the control request message is an aggregate control request message based on multiple media streams, both the identification information of the substream and the URI of the media stream to which the substream belongs are carried by a header field of the control request message.

In one implementation manner, the substream information obtaining unit 701 may include:
a description information request message sending subunit, configured to send a description information request message to the server; and
an obtaining subunit, configured to obtain the identification information of the substream and the URI of the media stream to which the substream belongs, from a response message that is returned by the server and carries substream declaration information.

Because the terminal may obtain identification information of a substream in other ways, identification information of a substream carried in the sent control request message may be incorrect; after the server detects the error, the server may return a response message carrying correct identification information of all substreams to the terminal. Correspondingly, the apparatus may further include:
a resending unit, configured to: if a response message that is returned by the server and carries substream declaration information is received after the control request message is sent, re-obtain identification information of the substream according to the substream declaration information carried in the response message, and resend a control request message.

In addition, in an actual application, it is possible that some servers do not support substream control. Therefore, if no processing is performed, after the server receives a control request message from the terminal, processing may be performed based on the entire media stream even if information such as identification information of a substream is carried in the control request message. To avoid this phenomenon, the control request message further carries a substream control feature tag, so that when the server does not support substream control, the server returns a response message that carries information indicating that substream control is not supported to the terminal.

Alternatively, the apparatus may further include:
an RTSP SETUP request message sending unit, configured to send an RTSP SETUP request message to the server, where the RTSP SETUP request message carries a substream control feature tag, so that when the server does not support substream control, the server returns a response message that carries information indicating that substream control is not supported to the terminal.

In the case where multiple coding types coexist, to simplify the identification process of the server, coding type information of the substream may be further carried in the control request message, so that the server obtains the coding type of the substream according to the coding type information of the substream and determines the substream corresponding to the identification information of the substream according to the coding type.

It should be noted that the media data control method and apparatus described from the perspective of the terminal correspond to the foregoing media data control method and apparatus described from the perspective of the server. Therefore, for what is not detailed, reference may be made to the foregoing description, and no repeated description is provided herein.

It is understandable to a person of ordinary skill in the art that all or a part of the steps in the foregoing method embodiments may be implemented by a program instructing relevant hardware. The program may be stored in a computer readable storage medium. When the program is executed, the following steps are included: obtaining identification information of a substream and a uniform resource identifier URI of a media stream to which the substream belongs; sending a control request message carrying the identification information of the substream and the URI of the media stream to which the substream belongs to a server; and after receiving a response message returned by the server, performing a corresponding control operation for the substream. The storage medium may be a ROM/RAM, a magnetic disk, a CD-ROM, and so on.

It should be noted that the terminal in the embodiments of the present invention may be a mobile phone, a PDA, a notebook, a computer, and so on, and that the server may be a base station, a media server, and so on. In addition, the steps of all the foregoing embodiments may be executed by a processor of the server or terminal.

The media data control method and apparatus provided by the present invention are described in detail above. Although the principle and implementation manners of the present invention are described with reference to exemplary embodiments, the embodiments are only intended to help understand the method and core idea of the present invention. In addition, with respect to specific implementation manners and application scope, modifications and variations may be made by a person of ordinary skill in the art according to the claims of the present invention. Therefore, the specification shall not be construed as a limitation on the present invention.

## Claims

1. A media data control method performed by a server apparatus, **characterized by** comprising:
receiving a control request message sent by a terminal (S101), wherein the control request message carries identification information of a substream and a uniform resource identifier URI of a media stream to which the substream belongs; wherein, the control request message is a real time streaming protocol, RTSP, PLAY request message or a RTSP PAUSE request message;
obtaining the identification information of the substream and the URI of the media stream to which the substream belongs (S102);
determining, according to the identification information of the substream and the URI of the media stream to which the substream belongs, media data of the substream (S103); and
performing, based on the media data, a control operation requested by the terminal, for the substream (S104);
wherein, the control operation is play control or pause control;
wherein before the receiving a control request message sent by a terminal, the method further comprises: receiving a description information request message sent by the terminal; and returning a response message carrying substream declaration information to the terminal, so that the terminal obtains the identification information of the substream according to the substream declaration information; or
wherein before the receiving a control request message sent by the terminal, the method further comprises: receiving a RTSP SETUP request message sent by the terminal, wherein the RTSP SETUP request message carries a substream control feature tag; obtaining the substream control feature tag; and, if the substream control feature tag is capable of being identified correctly, returning a response message that carries information indicating that substream control is supported to the terminal, so that the terminal initiates substream control; otherwise, returning a response message that carries information indicating that substream control is not supported to the terminal.

2. The method according to claim 1, wherein: when the control request message is an independent control request message based on a single media stream, the identification information of the substream is carried by a header field of the control request message, and the URI of the media stream to which the substream belongs is carried by a request-uri field of the control request message; or when the control request message is an independent control request message based on a single media stream, both the identification information of the substream and the URI of the media stream to which the substream belongs are carried by a request-uri field of the control request message; or when the control request message is an aggregate control request message based on multiple media streams, both the identification information of the substream and the URI of the media stream to which the substream belongs are carried by a header field of the control request message.

3. The method according to claim 1 or 2, wherein the control request message further carries a substream control feature tag, and the method further comprises: obtaining the substream control feature tag; and if the substream control feature tag is capable of being identified correctly, continuing to perform the operation of obtaining the identification information of the substream and the URI of the media stream to which the substream belongs and subsequent operations, or otherwise, rejecting the control request, and returning a response message that carries information indicating that substream control is not supported to the terminal; or
wherein the control request message further carries coding type information of the substream, and the method further comprises: obtaining a coding type of the substream according to the coding type information of the substream, and determining the substream corresponding to the identification information of the substream according to the coding type.

4. A media data control apparatus, **characterized by** comprising:
a first message receiving unit (501), configured to receive a control request message sent by a terminal, wherein the control request message carries identification information of a substream and a uniform resource identifier URI of a media stream to which the substream belongs; wherein, the control request message is a real time streaming protocol, RTSP, PLAY request message or a RTSP PAUSE request message;
an information obtaining unit (502), configured to obtain the identification information of the substream and the URI of the media stream to which the substream belongs;
a data determining unit (503), configured to determine, according to the identification information of the substream and the URI of the media stream to which the substream belongs, media data of the substream; and
a media control unit (504), configured to perform, based on the media data, a control operation requested by the terminal, for the substream; wherein, the control operation is play control or pause control;
wherein, the apparatus further comprises: a second message receiving unit, configured to receive a description information request message sent by the terminal; and, a first responding unit, configured to return a response message carrying substream declaration information to the terminal, so that the terminal obtains the identification information of the substream according to the substream declaration information; or
wherein, the apparatus further comprises: a second substream control feature tag obtaining unit, configured to: receive a RTSP SETUP request message sent by the terminal, wherein the RTSP SETUP request message carries a substream control feature tag; and obtain the substream control feature tag; and, a second control unit, configured to: if the substream control feature tag is capable of being identified correctly, return a response message that carries information indicating that substream control is supported to the terminal, so that the terminal initiates substream control; otherwise, return a response message that carries information indicating that substream control is not supported to the terminal.

5. The apparatus according to claim 4, wherein the control request message further carries a substream control feature tag, and the apparatus further comprises:
a first substream control feature tag obtaining unit, configured to obtain the substream control feature tag; and
a first control unit, configured to: if the substream control feature tag is capable of being identified correctly, trigger the message parsing unit to continue to perform the operation of the obtaining the identification information of the substream and the URI of the media stream to which the substream belongs and subsequent operations, or otherwise, reject the control request, and return a response message that carries information indicating that substream control is not supported to the terminal.

## Patentansprüche

1. Mediendatensteuerungsverfahren, das durch eine Server-Vorrichtung ausgeführt wird, **dadurch gekennzeichnet, dass** es Folgendes umfasst:
Empfangen einer Steuerungsanforderungsnachricht, die durch ein Endgerät gesendet wird (S101), wobei die Steuerungsanforderungsnachricht Identifizierungsinformationen eines Unterstroms und einen einheitlichen Betriebsmittelbezeichner, URI, eines Medienstroms, zu dem der Unterstrom gehört, führt; wobei die Steuerungsanforderungsnachricht eine Echtzeit-Streamingprotokoll-PLAY-Anforderungsnachricht, RTSP-PLAY-Anforderungsnachricht, oder eine RTSP-PAUSE-Anforderungsnachricht ist;
Erhalten der Identifizierungsinformationen des Unterstroms und des URI des Medienstroms, zu dem der Unterstrom gehört (S102);
Bestimmen gemäß den Identifizierungsinformationen des Unterstroms und dem URI des Medienstroms, zu dem der Unterstrom gehört, von Mediendaten des Unterstroms (S103); und
Ausführen basierend auf den Mediendaten einer Steuerungsoperation, die durch das Endgerät angefordert ist, für den Unterstrom (S104); wobei die Steuerungsoperation Abspielsteuerung oder Pausensteuerung ist;
wobei das Verfahren vor dem Empfangen einer Steuerungsanforderungsnachricht, die durch ein Endgerät gesendet wird, ferner Folgendes umfasst: Empfangen einer Beschreibungsinformationsanforderungsnachricht, die durch das Endgerät gesendet wird; und Zurückgeben einer Antwortnachricht, die Unterstromdeklarationsinformationen führt, zu dem Endgerät, so dass das Endgerät die Identifizierungsinformationen des Unterstroms gemäß den Unterstromdeklarationsinformationen erhält; oder
wobei das Verfahren vor dem Empfangen einer Steuerungsanforderungsnachricht, die durch das Endgerät gesendet wird, ferner Folgendes umfasst: Empfangen einer RTSP-SETUP-Anforderungsnachricht, die durch das Endgerät gesendet wird, wobei die RTSP-SETUP-Anforderungsnachricht ein Unterstromsteuerungsmerkmalsidentifizierungskennzeichen führt; Erhalten des Unterstromsteuerungsmerkmalsidentifizierungskennzeichens; und, falls das Unterstromsteuerungsmerkmalsidentifizierungskennzeichen korrekt identifiziert werden kann, Zurückgeben einer Antwortnachricht, die Informationen führt, die angaben, dass Unterstromsteuerung unterstützt wird, zu dem Endgerät, so dass das Endgerät Unterstromsteuerung initiiert; oder andernfalls Zurückgeben einer Antwortnachricht, die Informationen führt, dass Unterstromsteuerung nicht unterstützt wird, zu dem Endgerät.

2. Verfahren nach Anspruch 1, wobei: wenn die Steuerungsanforderungsnachricht eine unabhängige Steuerungsanforderungsnachricht basierend auf einem einzelnen Medienstrom ist, die Identifizierungsinformationen des Unterstroms durch ein Kopffeld der Steuerungsanforderungsnachricht geführt sind und der URI des Medienstroms, zu dem der Unterstrom gehört, durch ein uri-Anforderungsfeld der Steuerungsanforderungsnachricht geführt ist; oder wenn die Steuerungsanforderungsnachricht eine unabhängige Steuerungsanforderungsnachricht basierend auf einem einzelnen Medienstrom ist, sowohl die Identifizierungsinformationen des Unterstroms als auch der URI des Medienstroms, zu dem der Unterstrom gehört, durch ein uri-Anforderungsfeld der Steuerungsanforderungsnachricht geführt sind; oder wenn die Steuerungsanforderungsnachricht eine aggregierte Steuerungsanforderungsnachricht basierend auf mehreren Medienströmen ist, sowohl die Identifizierungsinformationen des Unterstroms als auch der URI des Medienstroms, zu dem der Unterstrom gehört, durch ein Kopffeld der Steuerungsanforderungsnachricht geführt sind.

3. Verfahren nach Anspruch 1 oder 2, wobei die Steuerungsanforderungsnachricht ferner ein Unterstromsteuerungsmerkmalsidentifizierungskennzeichen führt und das Verfahren ferner Folgendes umfasst: Erhalten des Unterstromsteuerungsmerkmalsidentifizierungskennzeichens; und falls das Unterstromsteuerungsmerkmalsidentifizierungskennzeichen korrekt identifiziert werden kann, Fortfahren, die Operation zum Erhalten der Identifizierungsinformationen des Unterstroms und des URI des Medienstroms, zu dem der Unterstrom gehört, und nachfolgende Operationen auszuführen, oder andernfalls Zurückweisen der Steuerungsanforderung und Zurückgeben einer Antwortnachricht, die Informationen führt, die angeben, dass Unterstromsteuerung nicht unterstützt wird, zu dem Endgerät; oder
wobei die Steuerungsanforderungsnachricht ferner Codierungstypinformationen des Unterstroms führt und das Verfahren ferner Folgendes umfasst: Erhalten eines Codierungstyps des Unterstroms gemäß den Codierungstypinformationen des Unterstroms und Bestimmen des Unterstroms, der den Identifizierungsinformationen des Unterstroms entspricht, gemäß dem Codierungstyp.

4. Mediensteuerungsvorrichtung, **dadurch gekennzeichnet, dass** sie Folgendes umfasst:
eine erste Nachrichtenempfangseinheit (501), die konfiguriert ist, eine Steuerungsanforderungsnachricht zu empfangen, die durch ein Endgerät gesendet wird, wobei die Steuerungsanforderungsnachricht Identifizierungsinformationen eines Unterstroms und einen einheitlichen Betriebsmittelbezeichner, URI, eines Medienstroms, zu dem der Unterstrom gehört, führt; wobei die Steuerungsanforderungsnachricht eine Echtzeit-Streamingprotokoll-PLAY-Anforderungsnachricht, RTSP-PLAY-Anforderungsnachricht, oder eine RTSP-PAUSE-Anforderungsnachricht ist;
eine Informationserhalteeinheit (502), die konfiguriert ist, die Identifizierungsinformationen des Unterstroms und den URI des Medienstroms, zu dem der Unterstrom gehört, zu erhalten;
eine Datenbestimmungseinheit (503), die konfiguriert ist, gemäß den Identifizierungsinformationen des Unterstroms und des URI des Medienstroms, zu dem der Unterstrom gehört, Mediendaten des Unterstroms zu bestimmen; und
eine Mediensteuerungseinheit (504), die konfiguriert ist, basierend auf den Mediendaten eine Steuerungsoperation, die durch das Endgerät angefordert ist, für den Unterstrom auszuführen; wobei die Steuerungsoperation Abspielsteuerung oder Pausensteuerung ist;
wobei die Vorrichtung ferner Folgendes umfasst: eine zweite Nachrichtenempfangseinheit, die konfiguriert ist, eine Beschreibungsinformationsanforderungsnachricht, die durch das Endgerät gesendet wird, zu empfangen; und eine erste Antworteinheit, die konfiguriert ist, eine Antwortnachricht, die Unterstromdeklarationsinformationen zu führen, zu dem Endgerät zurückzugeben, so dass das Endgerät die Identifizierungsinformationen des Unterstroms gemäß den Unterstromdeklarationsinformationen erhält; oder
wobei die Vorrichtung ferner Folgendes umfasst: eine zweite Unterstromsteuerungsmerkmalsidentifizierungskennzeichenerhalteeinheit, die konfiguriert ist: eine RTSP-SETUP-Anforderungsnachricht, die durch das Endgerät gesendet wird, zu empfangen, wobei die RTSP-SETUP-Anforderungsnachricht ein Unterstromsteuerungsmerkmalsidentifizierungskennzeichen führt; und das Unterstromsteuerungsmerkmalsidentifizierungskennzeichen zu erhalten; und eine zweite Steuereinheit, die konfiguriert ist: falls das Unterstromsteuerungsmerkmalsidentifizierungskennzeichen korrekt identifiziert werden kann, eine Antwortnachricht, die Informationen führt, die angeben, dass Unterstromsteuerung unterstützt wird, zu dem Endgerät zurückzugeben, so dass das Endgerät Unterstromsteuerung initiiert; andernfalls eine Antwortnachricht, die Informationen führt, dass Unterstromsteuerung nicht unterstützt wird, zu dem Endgerät zurückzugeben.

5. Vorrichtung nach Anspruch 4, wobei die Steuerungsanforderungsnachricht ferner ein Unterstromsteuerungsmerkmalsidentifizierungskennzeichen führt und die Vorrichtung ferner Folgendes umfasst:
eine erste Unterstromsteuerungsmerkmalsidentifizierungskennzeichenerhalteeinheit, die konfiguriert ist, das Unterstromsteuerungsmerkmalsidentifizierungskennzeichen zu erhalten; und
eine erste Steuereinheit, die konfiguriert ist: falls das Unterstromsteuerungsmerkmalsidentifizierungskennzeichen korrekt identifiziert werden kann, auszulösen, dass die Nachrichtenanalyseeinheit fortfährt, die Operation zum Erhalten der Identifizierungsinformationen des Unterstroms und des URI des Medienstroms, zu dem der Unterstrom gehört, und nachfolgende Operationen auszuführen, oder andernfalls die Steuerungsanforderung zurückzuweisen und eine Antwortnachricht, die Informationen führt, die angeben, dass Unterstromsteuerung nicht unterstützt wird, zu dem Endgerät zurückzugeben.

## Revendications

1. Procédé de commande de données multimédia exécuté par un appareil serveur, **caractérisé en ce qu'**il comprend les étapes suivantes :
recevoir un message de requête de commande envoyé par un terminal (S101), le message de requête de commande contenant des informations d'identification d'un sous-flux et un identifiant uniforme de ressource URI d'un flux multimédia auquel le sous-flux appartient ; le message de requête de commande étant un message de requête PLAY de protocole de diffusion continue en temps réel, RTSP, ou un message de requête PAUSE RTSP ;
obtenir les informations d'identification du sous-flux et l'URI du flux multimédia auquel le sous-flux appartient (S102) ;
déterminer, selon les informations d'identification du sous-flux et l'URI du flux multimédia auquel le sous-flux appartient, des données multimédia du sous-flux (S103); et
exécuter, sur la base des données multimédia, une opération de commande demandée par le terminal, pour le sous-flux (S104) ;
l'opération de commande étant une commande de lecture ou une commande de pause ;
avant l'étape consistant à recevoir un message de requête de commande envoyé par un terminal, le procédé comprenant en outre : recevoir un message de requête d'informations de description envoyé par le terminal ; et retourner un message de réponse contenant des informations de déclaration de sous-flux au terminal, afin que le terminal obtienne les informations d'identification du sous-flux selon les informations de déclaration de sous-flux ; ou
avant l'étape consistant à recevoir un message de requête de commande envoyé par le terminal, le procédé comprenant en outre : recevoir un message de requête SETUP RTSP envoyé par le terminal, le message de requête SETUP RTSP contenant une étiquette de caractéristique de commande de sous-flux ; obtenir l'étiquette de caractéristique de commande de sous-flux ; et, si l'étiquette de caractéristique de commande de sous-flux peut être identifiée correctement, retourner un message de réponse qui contient des informations indiquant qu'une commande de sous-flux est prise en charge par le terminal, afin que le terminal initie une commande de sous-flux ; dans le cas contraire, retourner un message de réponse qui contient des informations indiquant qu'une commande de sous-flux n'est pas prise en charge par le terminal.

2. Procédé selon la revendication 1, dans lequel : lorsque le message de requête de commande est un message de requête de commande indépendant basé sur un seul flux multimédia, les informations d'identification du sous-flux sont contenues dans un champ d'en-tête du message de requête de commande, et l'URI du flux multimédia auquel le sous-flux appartient est contenu dans un champ de requête URI du message de requête de commande ; ou lorsque le message de requête de commande est un message de requête de commande indépendant basé sur un seul flux multimédia, les informations d'identification du sous-flux ainsi que l'URI du flux multimédia auquel le sous-flux appartient sont contenus dans un champ de requête URI du message de requête de commande ; ou lorsque le message de requête de commande est un message de requête de commande agrégé basé sur plusieurs flux multimédia, les informations d'identification du sous-flux ainsi que l'URI du flux multimédia auquel le sous-flux appartient sont contenus dans un champ d'en-tête du message de requête de commande.

3. Procédé selon la revendication 1 ou 2, dans lequel le message de requête de commande contient en outre une étiquette de caractéristique de commande de sous-flux, et le procédé comprend en outre : obtenir l'étiquette de caractéristique de commande de sous-flux ; et si l'étiquette de caractéristique de commande de sous-flux peut être identifiée correctement, continuer à exécuter l'opération consistant à obtenir les informations d'identification du sous-flux et l'URI du flux multimédia auquel le sous-flux appartient et des opérations subséquentes, ou sinon, rejeter la requête de commande, et retourner un message de réponse qui contient des informations indiquant qu'une commande de sous-flux n'est pas prise en charge par le terminal ; ou
le message de requête de commande contenant en outre des informations de type de codage du sous-flux, et le procédé comprenant en outre : obtenir un type de codage du sous-flux selon les informations de type de codage du sous-flux, et déterminer le sous-flux correspondant aux informations d'identification du sous-flux selon le type de codage.

4. Appareil de commande de données multimédia, **caractérisé en ce qu'**il comprend :
une première unité de réception de message (501), configurée pour recevoir un message de requête de commande envoyé par un terminal, le message de requête de commande contenant des informations d'identification d'un sous-flux et un identifiant uniforme de ressource URI d'un flux multimédia auquel le sous-flux appartient ; le message de requête de commande étant un message de requête PLAY de protocole de diffusion continue en temps réel, RTSP, ou un message de requête PAUSE RTSP ;
une unité d'obtention d'informations (502), configurée pour obtenir les informations d'identification du sous-flux et l'URI du flux multimédia auquel le sous-flux appartient ;
une unité de détermination de données (503), configurée pour déterminer, selon les informations d'identification du sous-flux et l'URI du flux multimédia auquel le sous-flux appartient, des données multimédia du sous-flux ; et
une unité de commande multimédia (504), configurée pour exécuter, sur la base des données multimédia, une opération de commande demandée par le terminal, pour le sous-flux ;
l'opération de commande étant une commande de lecture ou une commande de pause ;
l'appareil comprenant en outre : une deuxième unité de réception de message,
configurée pour recevoir un message de requête d'informations de description envoyé par le terminal ; et, une première unité de réponse, configurée pour retourner un message de réponse contenant des informations de déclaration de sous-flux au terminal, afin que le terminal obtienne les informations d'identification du sous-flux selon les informations de déclaration de sous-flux ; ou
l'appareil comprenant en outre : une deuxième unité d'obtention d'étiquette de caractéristique de commande de sous-flux, configurée pour : recevoir un message de requête SETUP RTSP envoyé par le terminal, le message de requête SETUP RTSP contenant une étiquette de caractéristique de commande de sous-flux ; et obtenir l'étiquette de caractéristique de commande de sous-flux ; et, une deuxième unité de commande, configurée pour : si l'étiquette de caractéristique de commande de sous-flux peut être identifiée correctement, retourner un message de réponse qui contient des informations indiquant qu'une commande de sous-flux est prise en charge par le terminal, afin que le terminal initie une commande de sous-flux ; dans le cas contraire, retourner un message de réponse qui contient des informations indiquant qu'une commande de sous-flux n'est pas prise en charge par le terminal.

5. Appareil selon la revendication 4, dans lequel le message de requête de commande contient en outre une étiquette de caractéristique de commande de sous-flux, et l'appareil comprend en outre :
une première unité d'obtention d'étiquette de caractéristique de commande de sous-flux, configurée pour obtenir l'étiquette de caractéristique de commande de sous-flux ; et
une première unité de commande, configurée pour : si l'étiquette de caractéristique de commande de sous-flux peut être identifiée correctement, amener l'unité d'analyse de message à continuer à exécuter l'opération consistant à obtenir les informations d'identification du sous-flux et l'URI du flux multimédia auquel le sous-flux appartient et des opérations subséquentes, ou sinon, rejeter la requête de commande, et retourner un message de réponse qui contient des informations indiquant qu'une commande de sous-flux n'est pas prise en charge par le terminal.
